# EUROPEAN PATENT SPECIFICATION

(11) **EP 3 514 115 B1**
(45) Date of publication and mention of the grant of the patent: **15.09.2021**
(21) Application number: 19151149.2
(22) Date of filing: 10.01.2019
(51) Int. Cl.: C02F 1/04, B01D 1/00, B01D 1/14, C02F 11/12, C02F 1/14

(54) **APPARATUS FOR COLLECTION AND DISPOSAL OF ORGANIC WASTES**
VORRICHTUNG ZUM SAMMELN UND ENTSORGEN VON ORGANISCHEN ABFÄLLEN
APPAREIL DE COLLECTE ET D'ÉLIMINATION DE DÉCHETS ORGANIQUES

(30) Priority: 18.01.2018 IT 201800001298
(43) Date of publication of application: 24.07.2019
(73) Proprietor: PTMATIC SRL, 20010 Bareggio (MI) (IT)
(72) Inventor: ONIDA, Paolo, 20090 OPERA (MI) (IT)
(74) Representative: Corradini, Corrado

(56) References cited:
- EP-A1- 1 447 385
- US-A1- 2007 102 276
- US-A1- 2014 014 277
- US-A1- 2014 251 881

## Description

### TECHNICAL FIELD

The present invention relates to the sector of systems dedicated to physiological needs and personal hygiene, and has been developed with particular regard to an apparatus for collection and disposal of organic wastes.

### PRIOR ART

Apparatuses for collection and disposal of organic wastes which do not require any connection to the sewage system, nor the water network or the electricity grid, have long been known. These apparatuses are particularly used in all those environmental conditions which lack the technical-economic conditions for the construction of a sewer system or water and electricity supply.

An apparatus of this kind is the one described in US2014/014277.

The apparatuses of known type can comprise a chamber, usually underground, inside which a separator element is arranged to allow, in use, the separation of liquid organic wastes from solid organic wastes. The chamber further comprises an inlet opening and an outlet opening facing above ground level to permit the passage of air flow into the chamber. These apparatuses use this air flow to favour the evaporation and drying process any liquid and solid organic wastes left in the open air is subjected to, completely eliminating the problem of potential soil pollution and the production of unpleasant odours.

Numerous experiments conducted by the Applicant have shown that the apparatuses for collection and disposal of organic wastes of known type present certain problems with evaporation efficiency. In various situations, the liquid wastes inside the chamber does not evaporate and the solid wastes has a high humidity coefficient. These conditions lead to extremely unpleasant odours, promote the proliferation of bacteria and attract numerous insects and animals, as well as render any relative maintenance activity extremely complex and troublesome.

Since these problems make it more difficult to use apparatuses for collection and disposal of organic wastes without sewer systems or water and electricity supply, the need arose to provide an apparatus able to improve the evaporation efficiency of organic wastes.

In light of the above, an object of the present invention is to provide a solution to this need.

Another object of the present invention is to "oxygenate" and "aerate" the solid organic wastes in order to accelerate the oxidation and drying processes of the wastes itself as much as possible. In fact, the rapid reduction of the moisture content makes it possible to minimize the problems related to the development of fermentation phenomena and the production of unpleasant odours, as well as drastically reduce the volume of the accumulated material. Furthermore, the process of oxidation and mineralization of organic residues allows the subsequent easy disposal of the residues once the accumulation capacity of the collection apparatus has been reached.

A further object is to obtain this result with a simple, rational and low-cost solution.

Such purposes are accomplished by the characteristics of the invention given in the independent claim. The dependent claims outline preferred and/or particularly advantageous aspects of the invention.

### DISCLOSURE OF THE INVENTION

The present invention provides an apparatus for collection and disposal of organic wastes according to claim 1.

Thanks to this solution each of the plurality of tanks is lapped by an independent air flow, thereby expanding the contact surface of the liquid organic wastes with the air and, consequently, making the evaporation process faster and more effective.

The present invention envisages that each evaporation tank comprises a bottom wall and a perimeter wall, the evaporation tanks being arranged overlying one another.

Thanks to this solution, each air flow passes near the liquid/air interface where the passage of the molecules from the liquid state to the gaseous state occurs, eliminating "stagnation" phenomena and avoiding the interruption of the evaporative process of the liquid organic wastes.

The invention envisages that the intermediate portion of each air duct comprises the bottom wall and the perimeter wall of one of the evaporation tanks as well as the bottom wall of the evaporation tank arranged in an overlying manner.

Thanks to this solution, each independent air flow is forced inside a duct and laps the entire surface of the liquid organic wastes in order to guarantee the continuous exchange of air over the entire evaporating area.

The invention envisages that each evaporation tank comprises a plurality of through openings obtained on the respective bottom wall and at least one recess obtained on the respective perimeter wall, the inlet end of the intermediate portion of each air duct comprising a respective recess and the outlet end of the intermediate portion of each air duct comprising a respective through opening.

Thanks to this solution the width of the duct for the passage of each air flow is equivalent to the width of the tank so as to facilitate the maximum diffusion of the air flow and cover the entire surface of the liquid organic wastes.

Still another aspect of the present invention envisages that each recess of the evaporation tanks is in fluid connection with a first opening of the covering element, each through opening of the intermediate and upper evaporation tanks is in fluid connection with a second opening of the covering element to allow the inlet and outlet of air into and out of the container respectively. Thanks to this solution it is possible to maximize the contact surface between the liquid organic wastes and the independent air flows without increasing the overall dimensions of the apparatus.

The present invention envisages a plurality of ducts, each connected to a through opening of the intermediate and upper evaporation tanks.

The present invention envisages a plurality of chimneys, each chimney comprising one of the ducts therein.

Thanks to this solution the paths of the air circulation ducts are kept independent from each other until the exit from the container, avoiding the dissipation of the difference in pressure between the inside and the outside of the container along the shortest path.

Another aspect of the present invention envisages a mechanism for separating liquid organic wastes from solid organic wastes, the mechanism comprising the drying tank, and a perforated plate arranged inclined within the drying tank. Thanks to this solution it is possible to avoid the re-humidification of the solid organic wastes resulting from subsequent use of the apparatus, accelerating the oxidation and drying processes of the same.

### BRIEF DESCRIPTION OF THE DRAWINGS

Further features and advantages of the present invention will become apparent from the following description, given only by way of example, with reference to the accompanying drawings, in which:
- figure 1 is a schematic longitudinal section view of an embodiment of the apparatus of the present invention;
- figure 2 is a schematic lateral section view of the embodiment shown in Figure 1;
- figure 3a is a plan view of an evaporation tank according to the present invention;
- figure 3b is a schematic cross-section view of the tank of figure 3a according to the present invention;
- figure 4 is a schematic longitudinal section view of a further embodiment of the present invention;
- figure 5 is a schematic longitudinal section view showing a second drying tank with reserve functions according to the present invention;
- figure 6 is a schematic lateral section view of a further embodiment of the present invention comprising a plurality of suction devices.

### IMPROVED METHOD FOR IMPLEMENTING THE INVENTION

A liquid contained inside a container tends to evaporate over time. The evaporation speed of the liquid is substantially influenced by three parameters: the temperature of the surrounding environment, the size of the air-liquid contact surface, and the relative humidity value of the air in contact with this liquid.

The variations in environmental temperature exponentially affect the evaporation speed. Reduced increments of the environmental temperature value lead to significant increases in the speed value with which the water molecules pass from the liquid to the gaseous state.

The dimensions of the air-liquid contact surface have a linear influence on the evaporation speed value. The evaporation speed is directly proportional to the size of the liquid area exposed to air.

The relative humidity value of the air in contact with the liquid represents the quantity of water vapour present in the air and is directly proportional to the water vapour pressure. Since evaporation takes place at any temperature until the equilibrium state is reached, i.e. as long as the air in contact with the liquid surface is not in saturation conditions, a reduced relative humidity value of the air in contact with the liquid increases the evaporation speed.

On the basis of these principles, the Applicant has carried out numerous experiments and has realised the present invention as described below in some of its preferred embodiments.

An apparatus for collection and disposal of organic wastes 1 according to the present invention comprises a container 10 which includes one or more side walls 12 and a bottom wall 14. The container 10 can be made of an impermeable material, for example polyethylene, and can be made in any shape and size.

The apparatus 1 further comprises a covering element 16 particularly adapted to closing the container 10 and separating the internal volume of the container 10 from the external environment and/or ground. The covering element 16 comprises a plurality of openings particularly adapted to putting the inside of the container in communication with the external environment, as will appear clearer below.

The apparatus 1 comprises a vessel, or toilet, 20 arranged facing and near one of the openings 22 formed on the covering element 16 and opening into the container 10.

In use, the container 10 is preferably, but not limited to, buried, or placed under the ground surface 24, while the vessel 20 is arranged above the ground surface 24.

The apparatus 1 further comprises a plurality of collection tanks, or pans or tubs, arranged inside the container 10. As can be seen in the figures, one of the embodiments of the present invention comprises a drying tank 30, particularly adapted to contain solid organic wastes, and three separate evaporation tanks 40, 40', 40", particularly adapted to contain liquid organic wastes.

In particular, the apparatus 1 comprises a first evaporation tank 40, or a lower evaporation tank 40, arranged near the bottom wall 14 of the container 10, a second evaporation tank 40', or an intermediate evaporation tank 40', arranged housed above the lower evaporation tank 40, and a third evaporation tank 40", or upper evaporation tank 40", arranged housed above the intermediate evaporation tank 40'.

Naturally, the shape, number and dimensions of the evaporation tanks 40, 40', 40" can vary widely with respect to that which is described and illustrated here without thereby departing from the scope of the present invention. For example, the lower evaporation tank 40 can be formed directly in the bottom wall 14 of the container 10, for example by means of moulding, or can be made separately and then engaged to said bottom wall 14.

Likewise, all the tanks contained inside the container 10 can be selectively engaged and/or fixed to one of the walls 12, 14 of the container 10, or to the covering element 16, or simply resting overlying one another.

The apparatus for collection and disposal of organic wastes 1 according to the present invention further comprises a plurality of air conduits particularly adapted to the circulation of air inside the container 10. Each air conduit comprises an inlet end, an outlet end, both connected to the environment outside the apparatus 1, and an intermediate portion facing a different evaporation tank 40, 40', 40".

According to this configuration, each evaporation tank 40, 40', 40" is crossed by a different and independent flow of air.

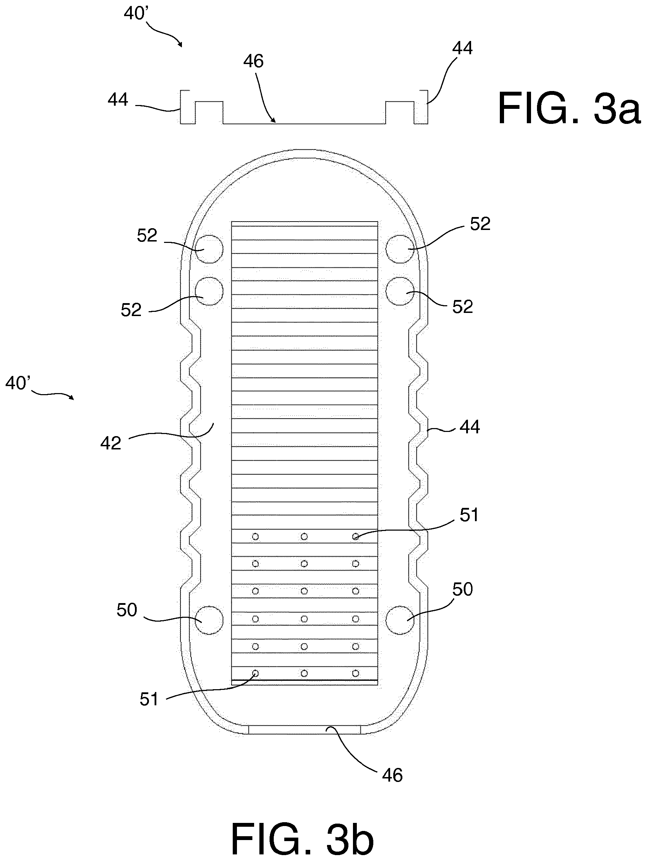

With particular reference to the embodiment shown in Figures 3a and 3b, the lower evaporation tank 40, the intermediate evaporation tank 40' and the upper evaporation tank 40" respectively comprise a bottom wall 42, 42', 42" and a perimeter wall 44, 44', 44", and can have a substantially rectangular shape. A recess 46, 46', 46" is formed on a portion of the perimeter wall 44, 44', 44" of each evaporation tank 40, 40', 40". Each recess 46, 46', 46" preferably has a depth much lesser than its width, i.e. it has a low and wide shape.

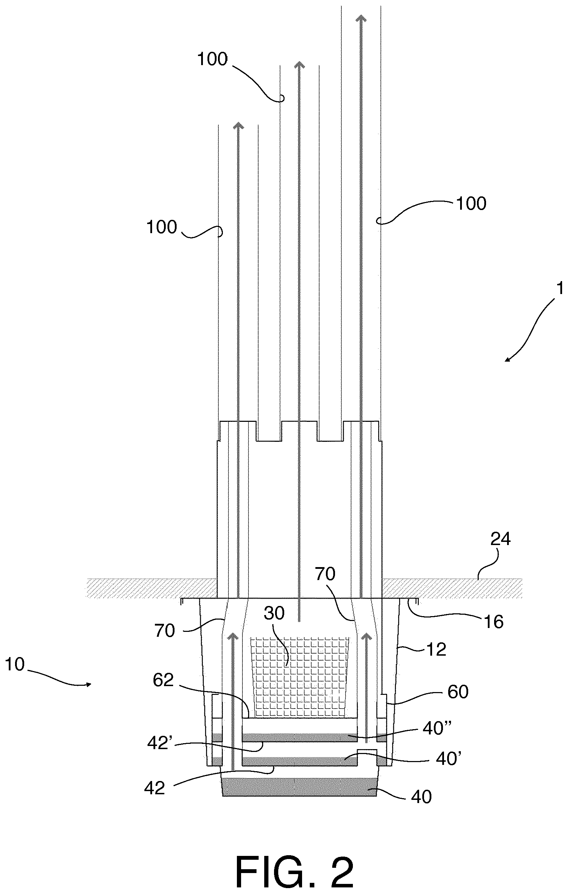

A plurality of through openings 50', 50", 52', 52" are formed on the peripheral portions of the bottom wall 42', 42" of the intermediate evaporation tank 40' and upper evaporation tank 40". The through openings 50', 50" of the upper evaporation tank 40" and the intermediate evaporation tank 40' are in direct communication with the tanks arranged below them and can, preferably, comprise a vertical wall with a height lower than the height of the perimeter wall 44', 44" of the evaporation tank 40', 40" in which they are obtained, as illustrated in Figure 2 and as will be clearer in the following.

According to the present invention, the intermediate evaporation tank 40' and the upper evaporation tank 40" comprise a plurality of through openings 51 formed in the central portion of the respective bottom walls 42, 42'. The through openings 51 are in direct communication with the respective tanks arranged below them and are particularly adapted to facilitating the passage of fluid organic wastes. Naturally, the number and/or position and/or diameter of one or more of the through openings described up to now can widely vary as long as they reach the intended purpose.

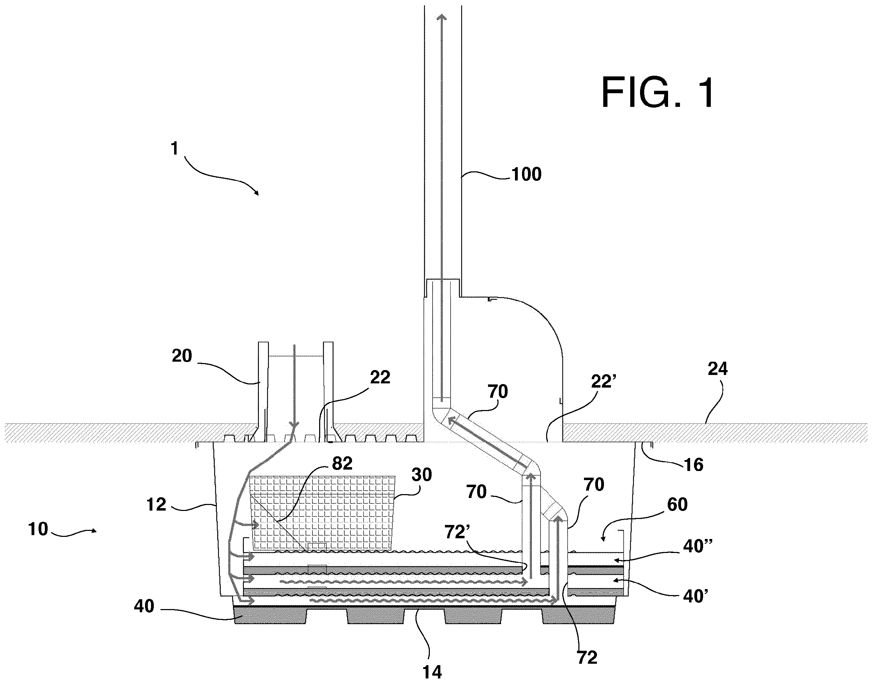

With reference to figures 1 and 2, the intermediate evaporation tank 40' is arranged superimposed on the lower evaporation tank 40, such that the bottom wall 42' of the intermediate evaporation tank 40' constitutes a covering element for the lower tank 40. Likewise, the upper evaporation tank 40" is arranged superimposed on the intermediate evaporation tank 40', such that the bottom wall 42" of the upper evaporation tank 40" constitutes a covering element for the intermediate evaporation tank 40'.

The apparatus 1 further comprises a covering element 60 of the upper evaporation tank 40". This element has, for example but not limited to, a geometric shape identical to that of the upper evaporation tank 40" and intermediate tank 40', but unlike the latter, has holes on a bottom wall 62 positioned at the supporting area of the drying tank 30, to allow the percolation of the liquids directly into the underlying upper evaporation tank 40". Also in this case, a plurality of through openings 64, 66 are formed on the peripheral portions of the bottom wall 62 of the covering element 60 of the tank. According to this configuration, each evaporation tank 40, 40', 40" contributes to define an air conduit delimited by its bottom wall 42, 42', 42", its perimeter wall 44, 44', 44" and the bottom wall 42, 42' and 42" of the evaporation tanks 40', 40" and of the covering element 60 arranged superimposed. Each air conduit has a width equal to the width of the respective bottom wall 42, 42', 42" and a height equal to the height of the respective perimeter wall 44, 44', 44". Each of the air conduit comprises an inlet that includes the respective recess 46, 46', 46" and one or more outlets that include one or more of the respective through openings 52, 52', 52".

According to a further particularly advantageous characteristic of the present invention, a further air conduit can be engaged to each through opening 52, 52', 52", for example, but not limited to, a duct 70 particularly adapted to favour the passage of the air exiting the through opening 52, 52', 52" towards the area outside the apparatus 1. In fact, each duct 70 comprises an end 72 connected to one of the through openings 52, 52', 52" and an end 74 connected to an opening formed on the apparatus 1 and flowing outwards, or leading to the external environment.

As is clearly illustrated in the figures, the apparatus 1 comprises a first duct 70 engaged at one of its ends 72 to the intermediate evaporation tank 40', so that said end 72 faces the lower evaporation tank 40. The apparatus 1 further comprises a second duct 70' connected at one of its ends 72' to the upper evaporation tank 40", so that said end 72' faces the intermediate evaporation tank 40'.

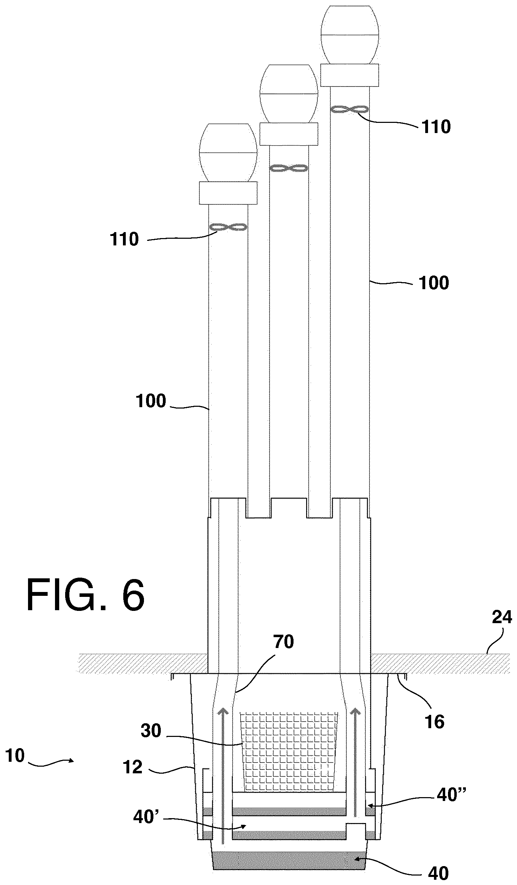

The apparatus for collection and disposal of organic wastes 1 according to the present invention also comprises a plurality of extraction chimneys 100, 100', 100" within which the ducts 70 converge. As is clearly visible in figures 2 and 6, a first extraction chimney 100 internally contains the first duct 70 facing the lower evaporation tank 40', and a second chimney 100' internally contains the second duct 70' facing the upper evaporation tank 40".

This configuration, as is clear in figure 1, makes it possible to create independent air flow paths, one for each evaporation tank, from the entrance into the apparatus 1 through the vessel 20 up to the exit from the apparatus 1 through the extraction chimneys 100, 100', 100".

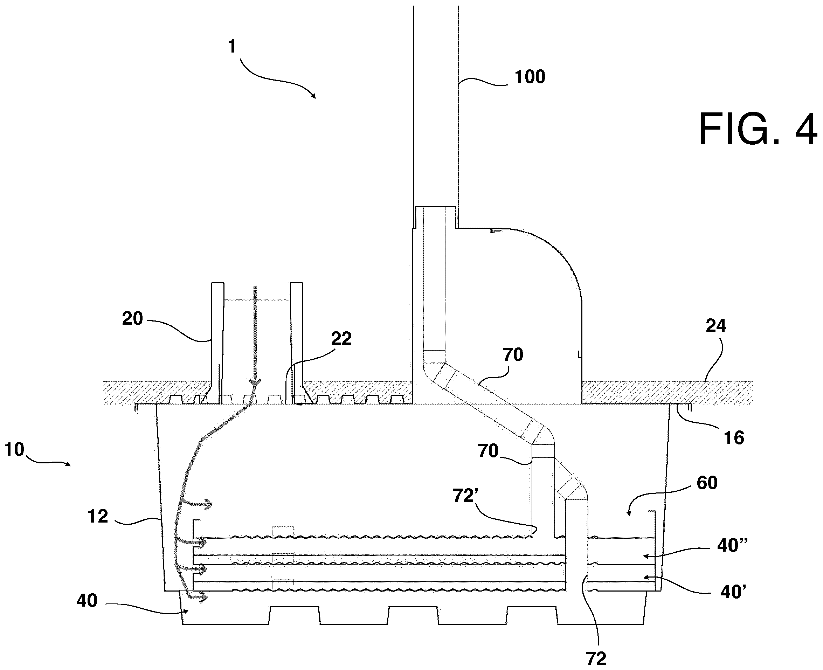

According to a further embodiment of the present invention, illustrated in Figure 4, the apparatus 1 can comprise a first duct 70 engaged at one of its ends 72 to the intermediate evaporation tank 40', so that said end 72 faces the lower evaporation tank 40, and a second duct 70" connected at one of its ends 72" to the tank covering element 60, so that said end 72" faces the upper evaporation tank 40".

Naturally the number of ducts 70, 70', 70" and extraction chimneys 100, 100', 100" can vary widely with respect to those described and illustrated herein, without thereby departing from the scope of the present invention. Similarly, it is possible to envisage a duct 70, 70', 70" arranged facing each evaporation tank 40, 40', 40", or only on one or more evaporation tanks 40, 40', 40", as illustrated in figures 1 and 4.

The apparatus 1 further comprises a mechanism for separating liquid organic wastes from solid organic wastes. The separation mechanism comprises the drying tank 30, made for example of a plastic material, comprising a bottom wall and a plurality of perforated side walls. The drying tank 30 is positioned above the tank covering element 60 at the inlet 22 of the vessel 20, and is particularly adapted to accumulating solid organic wastes. A perforated plate is arranged inside the drying tank 30, for example a grid 82, arranged inclined with respect to the bottom of the drying tank 30, and therefore to the plane defined by the tank covering element 60. The grid 82 can have a height and a width equal to that of the drying tank 30, so as to occupy about half the length of the drying tank 30 itself. According to a particularly advantageous characteristic, the grid 82 is inclined with respect to the bottom of the drying tank 30 at a 45° angle, preferably at an angle greater than 45°.

The apparatus 1 may further comprise a membrane of non-woven, permeable fabric inserted inside the drying tank 30 in such a way as to cover the inner walls thereof. This membrane can be disposed of together with the emptying of the apparatus 1. The permeable membrane protects the separation mechanism and facilitates the extraction of the dry residue when the storage capacity of the drying tank 30 is exhausted.

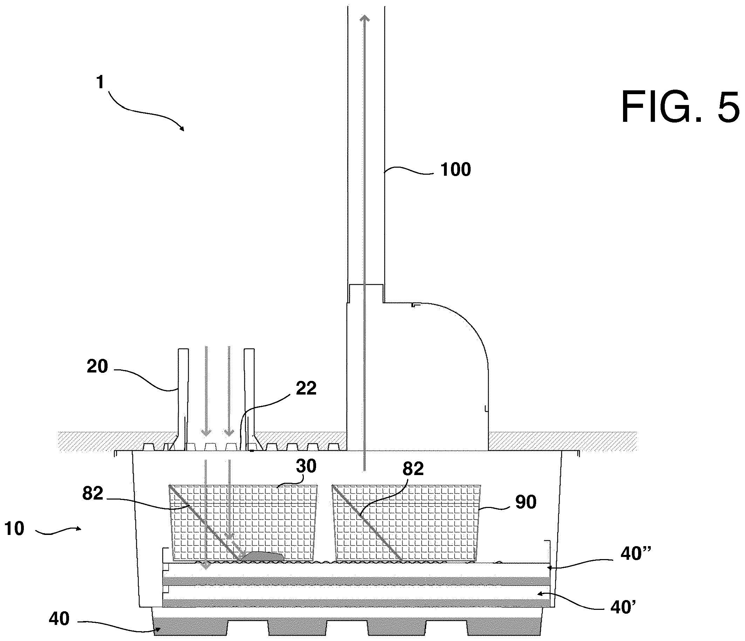

As illustrated in figure 5, the apparatus 1 can contain a second drying tank 90 with a reserve or replacement function of the tank 30. Thanks to this feature, when the capacity of the drying tank 30 in use is exhausted, it will be possible to replace it with the second drying tank 90 simply by reversing its position and leaving the first container inside the apparatus 1 to complete the drying and mineralization processes, before disposal of the residue. The second drying tank 90, positioned far from the discharge of the vessel 20, will in fact be completely free of any liquid supply, allowing the solid residue to completely dry.

In use, the solid and/or liquid organic wastes is inserted into the apparatus through the vessel 20. Falling on the inclined grid 82, solid organic wastes tends to slide down to its base and gradually accumulate on the bottom of the drying tank 30. Falling on the inclined grid 82, liquid organic wastes passes through it easily and, through the holes provided in the drying tank 30 and in the bottom wall 42" of the covering element 60, reach the upper evaporation tank 40" following an almost vertical path.

Thanks to this configuration, the inclined surface makes it possible to maximize the area of solids exposed directly to the air flow, accelerating the drying and oxidation processes. Moreover, as the volume of solid organic wastes increases, it tends to create a sort of "barrier" at the base of the inclined grid 82 which prevents liquid organic wastes, which could eventually reach this area, from re-humidifying the underlying part of solid organic wastes. This area therefore remains substantially protected by the subsequent entry of liquid organic wastes which, as said, tends to cross the inclined grid 82 before reaching the bottom of the drying tank 30.

When the liquid organic wastes contained in the upper evaporation tank 40" exceeds the level of the vertical wall of the openings 50 formed therein, the liquid organic wastes overflows into the intermediate evaporation tank 40'. When the liquid organic wastes contained in the intermediate evaporation tank 40' exceeds the level of the vertical wall of the openings 50 formed therein, the liquid organic wastes overflows into the lower evaporation tank 40.

Thanks to this configuration, the liquid organic wastes is accumulated inside three evaporation tanks 40, 40', 40" placed in series and overlying each other. In this way, with the same external dimensions of the apparatus for collection and disposal of organic wastes 1, the evaporation surface is tripled with respect to conventional systems, satisfying one of the three parameters that make it possible to increase the evaporation rate of the liquid organic wastes. The evaporation of liquid organic wastes and the drying of solid organic wastes occurs, as mentioned, thanks to the passage of an air fluid inside the apparatus 1. The air flow is created thanks to the particular configuration of the chimneys 100 which, heated by solar radiation, determine an increase in the temperature of the air contained within them, which consequently generates an upward motion with the suction of colder air from the lower part of chimneys 100 and the expulsion of warmer air from their top. The flow rate of the air in question is evidently higher the greater the heating of the air inside the chimney 100, that is, the greater the intensity of the solar radiation which hits the chimneys 100. For this reason it is very important to position the chimneys 100 in order to maximize their surfaces exposed to solar radiation during the day, for example with southern exposure at Italian latitudes and the absence of shielding elements such as buildings, fences or trees. Still for the same reason, the chimneys 100 are preferably made, or painted, with a black material capable of maximizing the absorption of solar radiation.

The suction of the air from the lower part of the chimneys, and therefore from the container 10, generates an intake of air through the opening 22 and thus through the vessel 20.

The flow of air entering the vessel 20 subsequently enters the plurality of air conduits inside the apparatus 1, and in particular:
- in the first air conduit which is formed from the inlet end which includes the recess 46 of the upper evaporation tank 40", from the intermediate portion which includes the bottom wall of the upper evaporation tank 40" and the bottom wall of the covering element 60, and from the outlet end which includes one or more through openings 52 formed in the covering element 60 and one or more ducts 70;
- in the second air conduit which is formed by the inlet end which includes the recess 46 of the intermediate evaporation tank 40', from the intermediate portion which includes the bottom wall of the intermediate evaporation tank 40' and the bottom wall of the upper evaporation tank 40", and from the outlet end which includes one or more through openings 52 formed in the upper evaporation tank 40" and one or more ducts 70; and
- in the third air conduit which is formed by the inlet end, by the intermediate portion which includes the bottom wall of the intermediate evaporation tank 40' and the bottom wall of the lower evaporation tank 40, and from the outlet end which includes one or more through openings 52 formed in the intermediate evaporation tank 40' and one or more ducts 70.

Thanks to this configuration, the airflow is forced to lap the surface of the liquid organic wastes contained in the evaporation tanks 40, 40', 40", becoming charged with humidity. The extraction of the humidity-laden air takes place through the ducts 70 positioned near one of the two ends of the evaporation tanks, while the "dry" air inlet is obtained through the recess 46 formed on the other end of the evaporation tanks 40, 40', 40". The low and wide shape of the recess 46 has been conceived with the intention of facilitating the maximum diffusion of the fluid stream also on the width of the evaporation tanks 40, 40', 40". Thanks to this configuration, the flow of air is forced to lap the entire surface of the liquid organic wastes, so as to guarantee the continuous exchange of air over the entire evaporating area precisely near the water/air interface where, as already mentioned, the passage of molecules from the liquid to the gaseous state occurs, satisfying another of the three parameters that makes it possible to increase the evaporation rate of the liquid organic wastes.

The efficiency of the evaporation process is further increased by the fact that the paths of the air circulation ducts are kept as independent as possible from each other up to the outlet end of the chimneys 100. This feature is essential to avoid creating "short circuits", i.e. that the pressure difference generated by the heating of the chimneys, and responsible for the activation of the air flow, is dissipated along the shortest route, leaving the air to stagnate in the remaining evaporation tanks or part thereof.

According to a further embodiment of the present invention illustrated in figure 6, the apparatus for collection and disposal of organic wastes 1 comprises a suction device 110 arranged near the upper end of each of the chimneys 100. The suction device 110, for example a natural draft vertical axis aspirator:
- facilitates the expulsion of air at the end of the chimney 100, avoiding stagnation or the inversion of air flow caused by side winds;
- makes it possible to maintain active air flow in the presence of wind, even in the absence of solar radiation, generating a suction action from the bottom upwards;
- notably increases the suction flow rate of the chimneys generated by the heating effect alone in the simultaneous presence of solar radiation and wind; and
- is an efficient protection system against the entrance of rainwater from the tops of the chimneys.

All the details can be replaced with other technically-equivalent elements. Likewise, the materials used, and the contingent shapes and sizes, may be any according to the requirements but without thereby departing from the scope of protection of the following claims.

## Claims

1. Apparatus for collection and disposal of organic wastes (1) comprising:
- a container (10) and a covering element (16) for closing the container (10) and separating the container (10) internal volume from the external environment, the container (10) including one or more side walls (12) and a bottom wall (14), the covering element (16) comprising a first opening (22) and a second opening (22') for putting the inside of the container (10) in communication with the environment outside the apparatus (1) and allowing a passage of an air fluid inside the apparatus (1);
the apparatus further comprises:
- a vessel (20) arranged facing and near the first opening (22) formed on the covering element (16) and opening into the container (10),
- a plurality of evaporation tanks (40, 40', 40") to contain liquid organic wastes and comprising a lower evaporation tank (40), arranged near the bottom wall (14) of the container (10), an intermediate evaporation tank (40'), arranged housed above the lower evaporation tank (40), and an upper evaporation tank (40')', arranged housed above the intermediate evaporation tank (40'), each evaporation tank (40, 40', 40") comprises a bottom wall (42, 42', 42") and a perimeter wall (44, 44', 44"),
- the plurality of evaporation tanks (40, 40', 40") being arranged superimposed on one another such that the bottom wall (42", 42') of an upper evaporation tank (40", 40') constitutes a covering element for a lower evaporation tank (40", 40), and a recess (46, 46', 46") is formed on a portion of the perimeter wall (44, 44', 44") of each evaporation tank (40, 40', 40");
- and the intermediate evaporation tank (40') and the upper evaporation tank (40')' comprising a plurality of through openings (51) formed in in the central portion of the respective bottom walls (42, 42) to facilitate the passage of fluid organic wastes towards the respective tanks arranged below them,
- the apparatus comprises a tank covering element (60) of the upper evaporation tank (40") and a drying tank (30) to contain solid organic wastes and to allow percolation of liquids directly into the underlying upper evaporation tank (40") being positioned above the tank covering element (60) at the inlet (22) of the vessel (20),
- the apparatus further comprises a plurality of ducts (70, 70') for the circulation of air within the container (10), each duct (70, 70') being engaged to a different evaporation tank (40', 40") respectively, and comprising an outlet end, connected to the second opening (22') of the covering element (16) and to the environment outside the apparatus (1), and an intermediate portion facing a different evaporation tank (40, 40', 40"), the second opening (22') being connected to a plurality of extraction chimneys (100, 100', 100"), each chimney comprising one of the ducts (70, 70') internally thereof, **characterized in that**
- a further plurality of through openings (50', 50", 52', 52") are formed on the peripheral portions of the bottom wall (42', 42") of the intermediate evaporation tank (40') and upper evaporation tank (40"),
the through openings (50', 50") of the upper evaporation tank (40") and the intermediate evaporation tank (40') are in direct communication with the tanks arranged below them, each duct (70, 70') comprises an inlet end (72) connected to one of the through openings (52, 52', 52") of the evaporation tanks (40', 40") so that said inlet end (72) faces the evaporation tanks (40, 40') arranged below respectively, whereby each evaporation tank (40, 40', 40") contributes to define an air conduit, comprising an inlet being the respective recess (46, 46', 46") and one or more outlets that include one or more through openings (52, 52', 52") to force the air flow to lap the surface of the liquid organic wastes contained in the tanks (40, 40', 40").

2. Apparatus according to claim 1, **characterized in that** each recess (46, 46', 46") of the evaporation tanks (40, 40', 40") is in fluid connection with the first opening (22) of the covering element (16), each through opening (52, 52') of the intermediate (40') and upper (40") evaporation tanks is in fluid connection with the second opening (22') of the covering element (16) to allow the inlet and outlet of air into and out of the container (10) respectively.

3. Apparatus according to claim 2, **characterized in that** it comprises a suction device (110) arranged inside each chimney (100).

4. Apparatus according to any one of the preceding claims, **characterized in that** it comprises a mechanism for separating liquid organic wastes from solid organic wastes, the mechanism comprising the drying tank (30), and a perforated plate (82) arranged inclined within the drying tank (30).

## Patentansprüche

1. Vorrichtung zum Sammeln und Entsorgen von organischen Abfällen (1), umfassend:
- einen Behälter (10) und ein Abdeckelement (16) zum Verschließen des Behälters (10) und Trennen des Innenvolumens des Behälters (10) von der äußeren Umgebung, wobei der Behälter (10) eine oder mehrere Seitenwände (12) und eine Bodenwand (14) enthält; das Abdeckelement (16) eine erste Öffnung (22) und eine zweite Öffnung (22') umfasst, um das Innere des Behälters (10) mit der Umgebung außerhalb der Vorrichtung (1) in Verbindung zu bringen und den Durchgang eines Luftfluids innerhalb der Vorrichtung (1) zu erlauben; wobei die Vorrichtung weiter Folgendes umfasst:
- ein Gefäß (20), das gegenüber und in der Nähe der ersten Öffnung (22) angeordnet ist, die an dem Abdeckelement (16) ausgebildet ist und in den Behälter (10) mündet,
- eine Vielzahl von Verdampfungstanks (40, 40', 40"), um flüssige organische Abfälle aufzunehmen und umfassend einen unteren Verdampfungstank (40), der in der Nähe der Bodenwand (14) des Behälters (10) angeordnet ist; einen dazwischenliegenden Verdampfungstank (40'), der oberhalb des unteren Verdampfungstanks (40) angeordnet untergebracht ist, und einen oberen Verdampfungstank (40')', der oberhalb des dazwischenliegenden Verdampfungtanks (40') angeordnet untergebracht ist, wobei jeder Verdampfungstank (40, 40', 40") eine Bodenwand (42, 42', 42") und eine Umfangswand (44, 44', 44") umfasst,
- wobei die Vielzahl von Verdampfungstanks (40, 40', 40") übereinander angeordnet sind, so dass die Bodenwand (42', 42") eines oberen Verdampfungstanks (40", 40') ein Abdeckelement für den unteren Verdampfungstank (40", 40) bildet, und eine Aussparung (46, 46', 46") an einem Abschnitt der Umfangswand (44, 44', 44") jedes Verdampfungstanks (40, 40', 40") ausgebildet wird;
- und der dazwischenliegende Verdampfungstank (40') und der obere Verdampfungstank (40')' eine Vielzahl von Durchgangsöffnungen (51) aufweisen, die im mittleren Abschnitt der jeweiligen Bodenwände (42, 42') ausgebildet sind, um den Durchgang flüssiger organischer Abfälle in Richtung der jeweiligen unter ihnen angeordneten Tanks zu erleichtern,
- die Vorrichtung ein Tankabdeckelement (60) des oberen Verdampfungstanks (40") und einen Trocknungstank (30) umfasst, um feste organische Abfälle aufzunehmen und das Durchsickern von Flüssigkeiten direkt in den darunterliegenden oberen Verdampfungstank (40") zu ermöglichen, der über dem Tankabdeckelement (60) am Einlass (22) des Gefäßes (20) positioniert ist,
- die Vorrichtung weiter eine Vielzahl von Kanälen (70, 70') zur Luftzirkulation innerhalb des Behälters (10) umfasst, wobei jeder Kanal (70, 70') jeweils mit einem anderen Verdampfungstank (40', 40") in Eingriff steht, und ein Auslassende, das mit der zweiten Öffnung (22') des Abdeckelements (16) und mit der Umgebung außerhalb der Vorrichtung (1) in Verbindung steht, und einen dazwischenliegenden Abschnitt umfasst, der einem anderen Verdampfungstank (40, 40', 40") zugewandt ist, wobei die zweite Öffnung (22') mit einer Vielzahl von Absaugkaminen (100, 100', 100") in Verbindung steht und jeder Kamin eines der Kanäle (70, 70') intern davon umfasst,
**dadurch gekennzeichnet, dass**
- eine weitere Vielzahl von Durchgangsöffnungen (50', 50", 52', 52") an den Umfangsabschnitten der Bodenwand (42', 42") des dazwischenliegenden Verdampfungstanks (40') und des oberen Verdampfungstanks (40") ausgebildet sind,
wobei die Durchgangsöffnungen (50', 50") des oberen Verdampfungstanks (40") und des dazwischenliegenden Verdampfungstanks (40') in direkter Verbindung mit den darunter angeordneten Tanks stehen, wobei jeder Kanal (70, 70') ein Einlassende (72) umfasst, das mit einer der Durchgangsöffnungen (52, 52', 52") der Verdampfungstanks (40', 40") verbunden ist, so dass das Einlassende (72) den Verdampfungstanks (40', 40") zugewandt ist, die jeweils darunter angeordnet sind, wobei jeder Verdampfungstank (40, 40', 40") dazu beiträgt eine Luftleitung zu definieren, umfassend einen Einlass, der die jeweilige Aussparung (46, 46', 46") ist, und einen oder mehrere Auslässe, die eine oder mehrere der Durchgangsöffnungen (52, 52', 52") umfassen, so dass der Luftstrom gezwungen wird die Oberfläche der flüssigen organischen Abfälle zu umspülen, die in den Verdampfungstanks (40, 40', 40')' enthalten sind.

2. Vorrichtung nach Anspruch 1, **dadurch gekennzeichnet, dass** jede Aussparung (46, 46', 46") der Verdampfungstanks (40, 40', 40") in Fluidverbindung mit der ersten Öffnung (22) des Abdeckelements (16) steht, wobei jede Durchgangsöffnung (52, 52') des dazwischenliegenden (40') und des oberen Verdampfungstanks (40") in Fluidverbindung mit der zweiten Öffnung (22') des Abdeckelements (16) steht, um jeweils den Einlass und Auslass von Luft in bzw. aus dem Behälter (10) zu ermöglichen.

3. Vorrichtung nach Anspruch 2, **dadurch gekennzeichnet, dass** sie eine innerhalb jedes Schornsteins (100) angeordnete Absaugvorrichtung (110) umfasst.

4. Vorrichtung nach irgendeinem der vorhergehenden Ansprüche, **dadurch gekennzeichnet, dass** sie einen Mechanismus zum Trennen flüssiger organischer Abfälle von festen organischen Abfällen umfasst, wobei der Mechanismus den Trocknungstank (30) und eine perforierte Platte (82) umfasst, die geneigt innerhalb des Trocknungstanks (30) angeordnet ist.

## Revendications

1. Appareil pour une collecte et élimination des déchets organiques (1) comprenant :
- un contenant (10) et un élément de couverture (16) pour fermer le contenant (10) et séparer le volume intérieur de contenant (10) de l'environnement extérieur, le contenant (10) incluant une ou plusieurs parois latérales (12) et une paroi de fond (14), l'élément de couverture (16) comprenant une première ouverture (22) et une deuxième ouverture (22') pour mettre l'intérieur du contenant (10) en communication avec l'environnement à l'extérieur de l'appareil (1) et permettant un passage d'un fluide d'air à l'intérieur de l'appareil (1) ; l'appareil comprend en outre :
- un récipient (20) disposé en face et près de la première ouverture (22) formé sur l'élément de couverture (16) et s'ouvrant dans le contenant (10),
- une pluralité de réservoirs d'évaporation (40, 40', 40") pour contenir des déchets organiques liquides et comprenant un réservoir d'évaporation inférieur (40), disposé près de la paroi de fond (14) du contenant (10), un réservoir d'évaporation intermédiaire (40'), disposé logé au-dessus du réservoir d'évaporation inférieur (40), et un réservoir d'évaporation supérieur (40')', disposé logé au-dessus du réservoir d'évaporation intermédiaire (40'), chaque réservoir d'évaporation (40, 40', 40") comprend une paroi de fond (42, 42', 42") et une paroi de périmètre (44, 44', 44"),
- la pluralité de réservoirs d'évaporation (40, 40', 40") étant disposés superposés l'un sur l'autre de sorte que la paroi de fond (42", 42') d'un réservoir d'évaporation supérieur (40", 40') constitue un élément de couverture pour un réservoir d'évaporation inférieur (40", 40), et un évidement (46, 46', 46") est formé sur une portion de la paroi de périmètre (44, 44', 44") de chaque réservoir d'évaporation (40, 40', 40") ;
- et le réservoir d'évaporation intermédiaire (40') et le réservoir d'évaporation supérieur (40')' comprenant une pluralité d'ouvertures traversantes (51) formées dans la portion centrale des parois de fond (42, 42) respectives pour faciliter le passage de déchets organiques fluides vers les réservoirs respectifs disposés au-dessous d'eux,
- l'appareil comprend un élément de couverture de réservoir (60) du réservoir d'évaporation supérieur (40") et un réservoir de séchage (30) pour contenir des déchets organiques solides et pour permettre une percolation de liquides directement dans le réservoir d'évaporation supérieur (40") sous-jacent étant positionné au-dessus de l'élément de couverture de réservoir (60) au niveau de l'entrée (22) du récipient (20),
- l'appareil comprend en outre une pluralité de conduits (70, 70') pour la circulation d'air à l'intérieur du contenant (10), chaque conduit (70, 70') étant en prise avec un réservoir d'évaporation (40', 40") différent, respectivement, et comprenant une extrémité de sortie, reliée à la deuxième ouverture (22') de l'élément de couverture (16) et à l'environnement à l'extérieur de l'appareil (1), et une portion intermédiaire faisant face à un réservoir d'évaporation (40, 40', 40") différent, la deuxième ouverture (22') étant reliée à une pluralité de cheminées d'extraction (100, 100', 100"), chaque cheminée comprenant l'un des conduits (70, 70') à l'intérieur de celle-ci,
**caractérisé en ce que**
- une autre pluralité d'ouvertures traversantes (50', 50", 52', 52") sont formées sur les portions périphériques de la paroi de fond (42', 42") du réservoir d'évaporation intermédiaire (40') et du réservoir d'évaporation supérieur (40"),
les ouvertures traversantes (50', 50") du réservoir d'évaporation supérieur (40") et le réservoir d'évaporation intermédiaire (40') sont en communication directe avec les réservoirs disposés au-dessous d'eux, chaque conduit (70, 70') comprend une extrémité d'entrée (72) reliée à l'une des ouvertures traversantes (52, 52', 52") des réservoirs d'évaporation (40', 40") de sorte que ladite extrémité d'entrée (72) fait face aux réservoirs d'évaporation (40, 40') disposés au-dessous respectivement, par lequel chaque réservoir d'évaporation (40, 40', 40") contribue à définir un conduit d'air, comprenant une entrée étant l'évidement (46, 46', 46") respectif et une ou plusieurs sorties qui incluent une ou plusieurs ouvertures traversantes (52, 52', 52") pour forcer le flux d'air à recouvrir la surface des déchets organiques liquides contenus dans les réservoirs (40, 40', 40").

2. Appareil selon la revendication 1, **caractérisé en ce que** chaque évidement (46, 46', 46") des réservoirs d'évaporation (40, 40', 40") est en liaison fluidique avec la première ouverture (22) de l'élément de couverture (16), chaque ouverture traversante (52, 52') des réservoirs d'évaporation intermédiaire (40') et supérieur (40") est en liaison fluidique avec la deuxième ouverture (22') de l'élément de couverture (16) pour permettre l'entrée et la sortie d'air à l'intérieur et à l'extérieur du contenant (10) respectivement.

3. Appareil selon la revendication 2, **caractérisé en ce qu'**il comprend un dispositif d'aspiration (110) disposé à l'intérieur de chaque cheminée (100).

4. Appareil selon l'une quelconque des revendications précédentes, **caractérisé en ce qu'**il comprend un mécanisme pour séparer des déchets organiques liquides de déchets organiques solides, le mécanisme comprenant le réservoir de séchage (30) et une plaque perforée (82) disposée inclinée à l'intérieur du réservoir de séchage (30).
